(19) **Europäisches Patentamt**
**European Patent Office**
**Office européen des brevets**

(11) **EP 4 089 128 A1**

(12) **EUROPEAN PATENT APPLICATION**

(43) Date of publication:
**16.11.2022 Bulletin 2022/46**

(21) Application number: **22172113.7**

(22) Date of filing: **06.05.2022**

(51) International Patent Classification (IPC):
**C08G 18/10** (2006.01)  **C08G 18/24** (2006.01)
**C08G 18/30** (2006.01)  **C08G 18/42** (2006.01)
**C08G 18/72** (2006.01)  **C08G 18/73** (2006.01)
**C09D 175/06** (2006.01)  **C09J 175/06** (2006.01)

(52) Cooperative Patent Classification (CPC):
(C-Sets available)
**C08G 18/73; C08G 18/10; C08G 18/246;**
**C08G 18/307; C08G 18/4238; C08G 18/722;**
**C09D 175/06; C09J 175/06**  (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **11.05.2021 JP 2021080338**

(71) Applicant: **Asahi Kasei Kabushiki Kaisha**
**Tokyo 1000006 (JP)**

(72) Inventor: **Takei, Akira**
**Tokyo, 100-0006 (JP)**

(74) Representative: **Strehl Schübel-Hopf & Partner**
**Maximilianstrasse 54**
**80538 München (DE)**

(54) **POLYISOCYANATE COMPOSITION AND CURED FILM**

(57)  A polyisocyanate composition contains a polyisocyanate derived from a diisocyanate and a polyester polyol, wherein a molar ratio NCO/OH during a reaction between an isocyanate group of the diisocyanate and a hydroxy group of the polyester polyol is 3.0 or more, wherein the content of an aliphatic diisocyanate with respect to a total mass of the diisocyanate is 10 mass% or more and 100 mass% or less, wherein the polyisocyanate composition is substantially free of unreacted diisocyanates, wherein an isocyanate group content of the polyisocyanate composition with respect to a total mass of the polyisocyanate composition is 1.0 mass% or more and 5.9 mass% or less, and wherein the polyester polyol is composed of a dicarboxylic acid unit having 8 or fewer carbon atoms and a polyol unit.

EP 4 089 128 A1

(52) Cooperative Patent Classification (CPC): (Cont.)

C-Sets
**C08G 18/10, C08G 18/307**

**Description**

BACKGROUND OF THE INVENTION

Field of the Invention

The present invention relates to a polyisocyanate composition and a cured film.

Description of Related Art

In recent years, there has been an increasing need for degradable resins that have less impact on the environment, and there is also a demand for degradability of polyisocyanates. However, since a high-performance urethane composition has excellent durability and excellent hydrolysis resistance, even if it is released into the environment, it may remain without being degraded. In order to impart degradability to a high-performance urethane composition, first, a resin grain form is subdivided by hydrolysis in a first stage.
For example, Patent Document 1 discloses a polyisocyanate obtained by adding a diisocyanate to a polyester polyol containing succinic acid as a carboxylic acid and triethylene glycol as an alcohol as essential components.
[Patent Document 1] Japanese Patent No. 5263644

SUMMARY OF THE INVENTION

However, in Patent Document 1, the appearance of a cured film obtained by curing the obtained polyisocyanate alone is not specifically verified. In addition, the polyisocyanate described in Patent Document 1 has a high isocyanate group content of 6 mass% or more and 11 mass% or less, and there is room for improvement in degradability. Therefore, in order to further improve the degradability, a polyisocyanate having a large amount of ester and a low isocyanate group content is required.
The present invention has been made in view of the above circumstances, and provides a polyisocyanate composition having an excellent appearance and excellent hydrolyzability when formed into a cured film by curing the polyisocyanate composition alone.
Specifically, the present invention includes the following aspects.

(1) A polyisocyanate composition containing a polyisocyanate derived from a diisocyanate and a polyester polyol, wherein

a molar ratio NCO/OH during a reaction between an isocyanate group of the diisocyanate and a hydroxy group of the polyester polyol is 3.0 or more,
the content of an aliphatic diisocyanate with respect to a total mass of the diisocyanate is 10 mass% or more and 100 mass% or less,
the polyisocyanate composition is substantially free of unreacted diisocyanates,
an isocyanate group content of the polyisocyanate composition with respect to a total mass of the polyisocyanate composition is 1.0 mass% or more and 5.9 mass% or less, and
the polyester polyol is composed of a dicarboxylic acid unit having 8 or fewer carbon atoms and a polyol unit.

(2) The polyisocyanate composition according to (1), wherein the number-average molecular weight of the polyester polyol is 1,000 or more and 4,000 or less.
(3) The polyisocyanate composition according to (1) or (2), wherein the average functional group number of hydroxy groups of the polyester polyol is 2.0 or more and 4.0 or less.
(4) The polyisocyanate composition according to any one of (1) to (3), wherein the polyester polyol is composed of an aliphatic dicarboxylic acid unit having 8 or fewer carbon atoms and an aliphatic polyol unit.
(5) The polyisocyanate composition according to any one of (1) to (4), wherein a molar ratio NCO/OH during a reaction between an isocyanate group of the diisocyanate and a hydroxy group of the polyester polyol is 5.5 or more and 20 or less.
(6) The polyisocyanate composition according to any one of (1) to (5), which is a curing agent for a coating composition or a resin composition.
(7) A cured film obtained by curing the polyisocyanate composition according to any one of (1) to (5) in the presence of a catalyst.

According to the polyisocyanate composition of the above aspects, it is possible to provide a polyisocyanate composition having an excellent appearance and excellent hydrolyzability when formed into a cured film by curing the polyisocyanate composition alone. The cured film of the above aspect is obtained by curing the polyisocyanate composition alone and has an excellent appearance and hydrolyzability.

DETAILED DESCRIPTION OF THE INVENTION

Hereinafter, a form for implementing the present invention (hereinafter referred to as "the present embodiment") will be described in detail, but the present invention is not limited thereto, and can be variously modified without departing from the scope and spirit thereof.

Here, in this specification, "polyol" refers to a compound having two or more hydroxy groups (-OH) in one molecule.

In addition, in this specification, "polyisocyanate" refers to a reactant in which a plurality of monomer compounds having two or more isocyanate groups (-NCO) are bonded.

In addition, in this specification, unless otherwise specified, "(meth)acrylic" includes methacrylic and acrylic, and "(meth)acrylate" includes methacrylate and acrylate.

<<Polyisocyanate composition>>

A polyisocyanate composition of the present embodiment contains a polyisocyanate derived from a diisocyanate and a polyester polyol.

The isocyanate group content of the polyisocyanate composition substantially free of a solvent and diisocyanate with respect to the total mass of the polyisocyanate composition is 1.0 mass% or more and 5.9 mass% or less, preferably 1.5 mass% or more and 5.8 mass% or less, more preferably 2.0 mass% or more and 5.7 mass% or less, still more preferably 2.5 mass% or more and 5.6 mass% or less, and particularly preferably 3.0 mass% or more and 5.5 mass% or less.

When the isocyanate group content is equal to or more than the above lower limit value, the hardness of the cured film can be made sufficient. On the other hand, when the isocyanate group content is equal to or less than the above upper limit value, the hydrolyzability when it is formed into a cured film is improved.

The NCO group content can be determined, for example, by reacting the isocyanate group of the polyisocyanate composition with an excess amine (dibutylamine or the like) and back-titrating the remaining amine with an acid such as hydrochloric acid.

The polyester polyol is composed of a dicarboxylic acid unit having 8 or fewer carbon atoms and a polyol unit.

When the polyisocyanate composition of the present embodiment has the above configuration, it has an excellent appearance and excellent hydrolyzability when formed into a cured film by curing the polyisocyanate composition alone.

Next, constituent components constituting the polyisocyanate composition of the present embodiment will be described below in detail.

<Polyisocyanate>

The polyisocyanate contained in the polyisocyanate composition of the present embodiment is derived from a diisocyanate and a polyester polyol, that is, it is a reactant of a diisocyanate and a polyester polyol.

The polyisocyanate may have at least one structure selected from the group consisting of an allophanate structure, a uretdione structure, an iminooxadiazinedione structure, an isocyanurate structure, a urea structure, a urethane structure, and a biuret structure. Among these, it is preferable to have at least one structure selected from the group consisting of a urethane structure, an allophanate structure, a biuret structure, a urea structure, and an isocyanurate structure, and more preferable to have a urethane structure.

[Diisocyanate]

"Diisocyanate" is a general term for compounds having two isocyanate groups. The diisocyanate used in the polyisocyanate composition of the present embodiment may be an aliphatic diisocyanate.

Examples of the aliphatic diisocyanate include but are not limited to 1,4-diisocyanatobutane, 1,5-diisocyanatopentane, ethyl(2,6-diisocyanato)hexanoate, 1,6-diisocyanatohexane (which may hereinafter be abbreviated as "HDI"), 1,9-diisocyanato nonane, 1,12-diisocyanatododecane, and 2,2,4- or 2,4,4-trimethyl-1,6-diisocyanatohexane. These aliphatic diisocyanates may be used alone or two or more thereof may be used in combination. Among these, HDI is preferable as the diisocyanate.

The diisocyanate may further contain the following isocyanate monomers as long as the effects of the polyisocyanate composition of the present embodiment are not impaired.

(1) Aromatic diisocyanates such as diphenylmethane-4,4'-diisocyanate (MDI), 1,5-naphthalene diisocyanate, tolylene diisocyanate (TDI), xylylene diisocyanate, and m-tetramethylxylylene diisocyanate (TMXDI).

(2) Triisocyanates such as 4-isocyanate methyl-1,8-octamethylene diisocyanate (which may hereinafter be referred to as "NTI"), 1,3,6-hexamethylene triisocyanate (which may hereinafter be referred to as "HTI"), bis(2-isocyanatoethyl) 2-isocyanatoglutarate (which may hereinafter be referred to as "GTI"), and lysine triisocyanate (which may hereinafter be referred to as "LTI").

(3) Alicyclic diisocyanates such as 1,3- or 1,4-bis(isocyanatomethyl)cyclohexane (which may hereinafter be abbreviated as "hydrogenated XDI"), 1,3- or 1,4-diisocyanatocyclohexane, 3,5,5-trimethyl-1-isocyanato-3-(isocyanato methyl)cyclohexane (which may hereinafter be abbreviated as "IPDI"), 4-4'-diisocyanato-dicyclohexylmethane (which may hereinafter be abbreviated as "hydrogenated MDI"), and 2,5- or 2,6-diisocyanatomethylnorbornane.

The content of the aliphatic diisocyanate with respect to the total mass of the diisocyanate is 10 mass% or more and 100 mass% or less, and preferably 50 mass% or more and 100 mass% or less. When the content of the aliphatic diisocyanate is within the above range, the appearance of the coating tends to be good.

The polyisocyanate composition of the present embodiment is substantially free of unreacted diisocyanates. Since the polyisocyanate composition is substantially free of unreacted diisocyanates, it has an excellent appearance and excellent hydrolyzability when the polyisocyanate composition alone is cured to form a cured film.

Here, in this specification "substantially free of unreacted diisocyanates" means that the concentration of unreacted diisocyanates present in the polyisocyanate composition is 2.0 mass% or less, preferably 1.0 mass% or less, and more preferably 0.7 mass% or less. Examples of a method of obtaining a polyisocyanate composition substantially free of unreacted diisocyanates include a method of separating unreacted diisocyanates from the composition obtained after a polyisocyanate is produced. A method of purifying a polyisocyanate composition by separating unreacted diisocyanates or a solvent is not particularly limited, and examples thereof include a thin film distillation method and a solvent extraction method. When the polyisocyanate composition is not purified, the concentration of unreacted diisocyanates present in the polyisocyanate composition tends to be more than 2.0 mass%.

[Polyester polyol]

The polyester polyol is composed of a dicarboxylic acid unit having 8 or fewer carbon atoms and a polyol unit. That is, it is derived from a dicarboxylic acid having 8 or fewer carbon atoms and a polyol. Since the polyester polyol has a dicarboxylic acid having 8 or fewer carbon atoms as a constituent unit, the appearance when it is formed into a cured film can be excellent and the hydrolyzability can be improved.

Here, the number of carbon atoms in a dicarboxylic acid having 8 or fewer carbon atoms is the number of carbon atoms constituting the dicarboxylic acid excluding the two carbon atoms contained in the two carboxyl groups. The lower limit value of the number of carbon atoms is not particularly limited, but it may be, for example, 1 or more, and is preferably 2 or more.

Examples of dicarboxylic acids having 8 or fewer carbon atoms include oxalic acid, malonic acid, succinic acid, glutaric acid, adipic acid, pimelic acid, suberic acid, azelaic acid, sebacic acid, maleic acid, phthalic acid, isophthalic acid, terephthalic acid, and 1,4-cyclohexanedicarboxylic acid. Among these, the dicarboxylic acid having 8 or fewer carbon atoms is preferably an aliphatic dicarboxylic acid having 8 or fewer carbon atoms, and more preferably succinic acid or adipic acid.

The polyol constituting the polyester polyol is not particularly limited, and for example, a polyol having a molecular weight of 50 or more and 500 or less can be used.

Specific examples of polyols include ethylene glycol, propylene glycol, diethylene glycol, 1,3-butylene glycol, 1,4-butanediol, neopentyl glycol, 1,6-hexanediol, 2-ethyl-1,3-hexanediol, trimethylpentanediol, cyclohexanediol, trimethylolpropane, glycerin, pentaerythritol, 2-methylolpropanediol, and ethoxylated trimethylolpropane. Among these, an aliphatic polyol is preferable as the polyol.

Examples of preferable polyester polyols include those composed of an aliphatic dicarboxylic acid unit having 8 or fewer carbon atoms and an aliphatic polyol unit.

As the polyester polyol, a synthesized polyester polyol may be used or a commercially available polyester polyol may be used.

The polyester polyol is obtained by a condensation reaction between the above dicarboxylic acid alone or a mixture of two or more types thereof and a mixture of the above polyol.

Examples of commercially available polyester polyols include products named "PolyLite (registered trademark) OD-X-106" and "PolyLite (registered trademark) OD-X-2518" (commercially available from DIC).

The number-average molecular weight of the polyester polyol is preferably 1,000 or more and 4,000 or less, more preferably 1,500 or more and 3,500 or less, and still more preferably 2,000 or more and 3,000 or less. When the number-average molecular weight of the polyester polyol is equal to or more than the above lower limit value, the hydrolyzability of the polyisocyanate composition can be further improved. On the other hand, when the number-average molecular weight is equal to or less than the above upper limit value, thickening of the polyisocyanate composition can be further reduced.

The number-average molecular weight of the polyester polyol can be calculated based on a polystyrene by gel permeation chromatograph (GPC) measurement.

The average functional group number of hydroxy groups of the polyester polyol is preferably 2.0 or more and 4.0 or less, more preferably 2.0 or more and 3.0 or less, and still more preferably 2.4 or more and 2.9 or less. When the average functional group number of hydroxy groups of the polyester polyol is equal to or more than the above lower limit value, since the crosslinkability of the polyisocyanate composition is further improved, coating performance is further improved. On the other hand, when the average functional group number thereof is equal to or less than the above upper limit value, the flexibility of the polyisocyanate composition can be further improved.

The average functional group number (average number of OHs) of hydroxy groups of the polyester polyol can be determined by, for example, the following formula.

$$\text{``Average number of OHs''} = \{(\text{number-average molecular weight of polyester polyol}) \times \text{OH\%} \times 0.01\}/17$$

Here, "OH%" means a hydroxy group content (mass%), and a hydroxyl value is measured by potentiometric titration, a hydroxy group equivalent is calculated using the following formula, and the hydroxy group content can then be calculated.

$$\text{``Hydroxy group equivalent''} = (56.1 \times 1{,}000)/(\text{hydroxyl value})$$

$$\text{``Hydroxy group content (mass\%)''} = 100 \times 17/(\text{hydroxy group equivalent})$$

<Method of producing polyisocyanate composition>

The polyisocyanate is obtained by reacting the diisocyanate with the polyester polyol.

The amount of the polyester polyol added may be, for example, 50 parts by mass or more and 100 parts by mass or less, 53 parts by mass or more and 90 parts by mass or less, or 55 parts by mass or more and 80 parts by mass or less with respect to 100 parts by mass of the diisocyanate.

During the reaction, the molar ratio of isocyanate groups of diisocyanate to hydroxy groups of the polyester polyol (molar ratio of isocyanate groups/hydroxy groups) (NCO/OH) is 3.0 or more. When the molar ratio is equal to or more than the above lower limit value, the residual amount of unreacted diisocyanate monomers can be effectively reduced, and a polyisocyanate composition having an excellent coating appearance and hydrolyzability is obtained. The upper limit value of the molar ratio is not particularly limited, and may be 40 or less. In order to further increase the curing rate of the coating, the molar ratio is preferably 4.0 or more and 35 or less, more preferably 4.5 or more and 30 or less, still more preferably 5.0 or more and 23 or less, and yet more preferably 5.5 or more and 20 or less.

The reaction between the polyester polyol and the diisocyanate is performed as follows. The reaction temperature is generally room temperature (about 23°C) or higher and 200°C or lower, and preferably 60°C or higher and 120°C or lower. When the reaction temperature is equal to or higher than the above lower limit value, the reaction time becomes shorter, and on the other hand, when the reaction temperature is equal to or lower than the above upper limit value, it is possible to further avoid an increase in the viscosity of the polyisocyanate due to an undesired side reaction, and it is possible to further avoid coloring of the produced polyisocyanate.

The reaction may be performed without a solvent, or may be performed using any solvent inert to the isocyanate group. In addition, as necessary, a known catalyst may be used to promote the reaction between the isocyanate group and the hydroxy group.

<Applications>

Since the polyisocyanate composition allows a cured film having an excellent appearance and hydrolyze ability to be obtained, it can be used as a raw material for the above-mentioned performance such as a coating composition, a resin composition, an ink composition, a particulate composition, an adhesive, sealants, films, foams, plastic materials and like. Among these, it is preferably used as a curing agent for a coating composition or a resin composition.

«Cured film»

The cured film of the present embodiment is obtained by curing the above polyisocyanate composition in the presence of a catalyst.

The cured film of the present embodiment has an excellent appearance and hydrolyzability.

The cured film of the present embodiment can be produced by, for example, diluting or dissolving the above polyisocyanate composition in a solvent as necessary, adding a catalyst, and then applying it onto an adherend using a coater or the like, performing drying as necessary, and curing with heat.

The catalyst used is not particularly limited, and examples thereof include those shown in the following (a) to (f). These may be used alone or may be used in combination.

(a) Organic tin compounds such as tin octanate, tin 2-ethyl-1-hexanoate, tin ethylcaproate, tin laurate, tin palmitic acid, dibutyltin oxide, dibutyltin dichloride, dibutyltin diacetate, dibutyltin dimaleate, dibutyltin dilaurate, dioctyltin diacetate, and dibutyltin dilaurate.

(b) Organic zinc compounds such as zinc chloride, zinc octanate, zinc 2-ethyl-1-hexanate, zinc 2-ethylcaproate, zinc stearate, zinc naphthenate, and zinc acetylacetonate.

(c) Organic titanium compounds.

(d) Organic zirconium compounds.

(e) Tertiary amines such as triethylamine, tributylamine, N,N-diisopropylethylamine, and N,N-dimethylethanolamine.

(f) Diamines such as triethylenediamine, tetramethylethylenediamine, and 1,4-diazabicyclo[2.2.2]octane.

[Examples]

Hereinafter, the present embodiment will be described in more detail with reference to examples and comparative examples, but the present embodiment is not limited to the following examples.

<Test items>

For polyester polyols as a raw material and polyisocyanate compositions produced in examples and comparative examples, respective physical properties were measured and respective evaluations were performed according to the following methods.

[Physical property 1]

(Isocyanate group content)

First, 2 g or more and 3 g or less of a measurement sample was accurately weighed (Wg) in a flask. Then, 20 mL of toluene was added and the measurement sample was dissolved. Then, 20 mL of a toluene solution containing 2N di-n-butylamine was added, and mixed, and then the mixture was left at room temperature for 15 minutes. Then, 70 mL of isopropyl alcohol was added and mixed. Then, this solution was titrated into an indicator with a IN hydrochloric acid solution (factor F). The obtained titration value was set to V2mL. Then, without the polyisocyanate sample, the obtained titration value was set to V1ml. Then, the isocyanate group content (NCO%) (mass%) of the polyisocyanate composition was calculated from the following formula.

$$\text{Isocyanate group content (mass\%)} = (V1-V2) \times F \times 42/(W \times 1{,}000) \times 100$$

[Physical property 2]

(Number-average molecular weight)

The number-average molecular weight is a number-average molecular weight or a weight-average molecular weight based on a polystyrene measured through gel permeation chromatography (GPC) using the following device.

(Measurement conditions)

Device: HLC-802A commercially available from Tosoh Corporation
Column:

G1000HXL×1 commercially available from Tosoh Corporation
G2000HXL×1
G3000HXL×1

Carrier: tetrahydrofuran
Detection method: differential refractometer

[Physical property 3]

(Average functional group number of hydroxy group)

The average functional group number (average number of OHs) of hydroxy groups of the polyester polyol was determined by the following formula.

$$\text{“Average number of OHs”} = \{(\text{number-average molecular weight of polyester polyol}) \times \text{OH\%} \times 0.01\}/17$$

Here, in the above formula, the value calculated in the above "Physical property 2" was used as the "number-average molecular weight of polyester polyol." In addition, "OH%" means a hydroxy group content (mass%), the hydroxyl value was measured by potentiometric titration, the hydroxy group equivalent was calculated using the following formula, and the hydroxy group content was then calculated.

$$\text{“Hydroxy group equivalent”} = (56.1 \times 1{,}000)/(\text{hydroxyl value})$$

$$\text{“Hydroxy group content (mass\%)”} = 100 \times 17/(\text{hydroxy group equivalent})$$

[Physical property 4]

(Content (mass%) of aliphatic diisocyanate with respect to total mass of diisocyanate)

The weight ratio of the aliphatic diisocyanate with respect to a total amount of diisocyanates was measured as follows using the $^{13}$C-NMR measurement method. As an example, in the case of a polyisocyanate composition containing HDI as an aliphatic diisocyanate and IPDI as an alicyclic diisocyanate, the measurement method was as follows.
The polyisocyanate composition was dissolved in deuterated chloroform at a concentration of 20 mass% (after dissolution, 0.03 mass% of tetramethylsilane was added to the polyisocyanate composition). The chemical shift reference was 0 ppm for a signal of carbon of the methyl group of tetramethylsilane. The measurement was performed in a quantitative mode called an NNE method. In the measurement conditions, signals of carbon of two methyl groups from a cyclohexane ring as a constituent unit of IPDI were observed around 31.5 to 32.5 ppm and around 27.0 to 28.0 ppm. Carbons at positions of 2 to 5 of the hexamethylene chain as a constituent unit of HDI were observed around 26.0 to 27.0 ppm, around 27.0 to 28.0 ppm, around 29.0 to 30.0 ppm, and around 31.0 to 31.5 ppm. Therefore, the molar ratio (HDI/IPDI) of the constituent unit of HDI to the constituent unit of IPDI and the mass ratio (HDI mass/IPDI mass) were determined by the following formula.

1. An area of a signal derived from a constituent unit of IPDI around 31.5 to 32.5 ppm was set to 1.0, and an area of each signal was converted.

2. HDI/IPDI was determined by the following formula.

$$\text{HDI/IPDI}$$

$$=\{(\text{an area of a signal around } 26.0 \text{ to } 27.0 \text{ ppm}+\text{an area of a signal around } 27.0 \text{ to } 28.0$$

$$\text{ppm}+\text{an area of a signal around } 29.0 \text{ to } 30.0 \text{ ppm}+\text{an area of a signal around } 31.0 \text{ to } 31.5$$

$$\text{ppm})/(\text{an area corresponding to a signal of one carbon among methyl groups from the}$$

$$\text{cyclohexane ring as a constituent unit of IPDI observed around } 27.0 \text{ to } 28.0 \text{ ppm})\}/4$$

3. The ratio of HDI mass/IPDI mass was determined by the following formula.

$$\text{HDI mass/IPDI mass}=(\text{HDI/IPDI})\times(168/222)$$

[Physical property 5]

(Concentration of unreacted diisocyanate monomer)

The peak area% corresponding to the molecular weight (for example, 168 in the case of HDI) of the unreacted diisocyanate obtained by the GPC measurement was expressed as a mass concentration of unreacted diisocyanate monomers in the polyisocyanate composition.

[Production of cured film]

Each polyisocyanate composition was diluted with butyl acetate so that the solid content was 57 mass%, and 3,000 ppm (by mass) of dibutyltin dilaurate (DBT, product name "Neostann U-100" commercially available from Nitto Kasei Co., Ltd.) as a tin catalyst was then added to the solid content to prepare a diluted solution. Then, the diluted solution was applied to a glass plate so that the dry film thickness was 30 μm, and kept in an environment of 23°C and 50% RH for 7 days to obtain a cured film.

<Evaluation method>

[Evaluation 1]

(Coating curing rate)

After the diluted solution was applied to a glass plate so that the dry film thickness was 30 μm, the curability of the coating after 1 day in an environment of 23°C and 50% RH was determined by the touch and the presence of sagging of the coating, and the coating curing rate was evaluated according to the following evaluation criteria.

(Evaluation criteria)

A: No tack and no sagging of the coating
B: Tack and no sagging of the coating
C: Tack and sagging of the coating

[Evaluation 2]

(Appearance)

The appearance of the obtained cured film was visually observed and evaluated according to the following evaluation criteria.

(Evaluation criteria)

A: Transparent and uniform
C: With turbidity

[Evaluation 3]

(Hydrolyzability)

0.1 g of the obtained cured film was weighed, kept in deionized water at 60°C for 14 days, and then taken out, and dried, and the remaining amount of the coating was weighed. The percentage obtained by dividing the remaining amount of the coating after immersion by the weight before immersion was calculated as the residual rate (mass%), and evaluated according to the following evaluation criteria.

(Evaluation criteria)

A: The residual rate was less than 96 mass%
C: The residual rate was 96 mass% or more

<Synthesis of polyester polyol>

[Synthesis Example 1]

(Synthesis of polyester polyol A-3)

40 g of 1,3-butylene glycol, 170 g of 1,6-hexanediol, 220 g of neopentyl glycol, 83 g of 2-ethyl-1,3-hexanediol, and 590 g of adipic acid (4 carbon atoms) were put into a flask including a stirring rod, a temperature sensor, and a reflux tube, dry nitrogen was flowed into the flask, heating was performed to 180°C or higher and 210°C or lower with stirring, and an esterification reaction was allowed to proceed. The reaction was stopped when the acid value became 0.5 mg KOH/g or less, and a polyester polyol A-3 having a number-average molecular weight of 2,100, a hydroxyl value of 60 mg KOH/g, and an average functional group number of hydroxy groups of 2.1 was obtained.

[Synthesis Example 2]

(Synthesis of polyester polyol A-4)

160 g of 1,3-butylene glycol, 250 g of 1,6-hexanediol, 227 g of 2-ethyl-1,3-hexanediol, and 575 g of succinic acid (2 carbon atoms) were put into a flask including a stirring rod, a temperature sensor, and a reflux tube, dry nitrogen was flowed into the flask, heating was performed to 180°C or higher and 210°C or lower with stirring, and an esterification reaction was allowed to proceed. The reaction was stopped when the acid value became 0.5 mg KOH/g or less, and a polyester polyol A-4 having a number-average molecular weight of 2,300, a hydroxyl value of 60 mg KOH/g, and an average functional group number of hydroxy groups of 2.4 was obtained.

[Synthesis Example 3]

(Synthesis of polyester polyol A-5)

100 g of 1,3-butylene glycol, 150 g of 1,6-hexanediol, 160 g of 2-ethyl-1,3-hexanediol, and 600 g of sebacic acid (8 carbon atoms) were put into a flask including a stirring rod, a temperature sensor, and a reflux tube, dry nitrogen was flowed into the flask, heating was performed to 180°C or higher and 210°C or lower with stirring, and an esterification reaction was allowed to proceed. The reaction was stopped when the acid value became 0.5 mg KOH/g or less, and a polyester polyol A-5 having a number-average molecular weight of 2,000, a hydroxyl value of 60 mg KOH/g, and an average functional group number of hydroxy groups of 2.0 was obtained.

[Synthesis Example 4]

(Synthesis of polyester polyol A-6)

100 g of 1,3-butylene glycol, 140 g of 1,6-hexanediol, 150 g of 2-ethyl-1,3-hexanediol, and 650 g of dodecanedioic acid (10 carbon atoms) were put into a flask including a stirring rod, a temperature sensor, and a reflux tube, dry nitrogen was flowed into the flask, heating was performed to 180°C or higher and 210°C or lower with stirring, and an esterification reaction was allowed to proceed. The reaction was stopped when the acid value became 0.5 mg KOH/g or less, and a polyester polyol A-6 having a number-average molecular weight of 2,000, a hydroxyl value of 60 mg KOH/g, and an average functional group number of hydroxy groups of 2.0 was obtained.

<Production of polyisocyanate composition>

[Example 1]

(Production of polyisocyanate composition PA-a1)

The inside of a 4-neck flask including a stirrer, a thermometer, a reflux cooling tube, a nitrogen blowing tube, and a dropping funnel was set to a nitrogen atmosphere, 1,000 g of hexamethylene diisocyanate (HDI), and 746 g of a polyester polyol (commercially available from DIC, product name "PolyLite (registered trademark) OD-X-106", containing an adipic acid unit, a number-average molecular weight of 2,400, and an average functional group number of hydroxy groups of 2.6) were put thereinto, the temperature in the reaction container was kept at 100°C with stirring, and a urethane reaction was allowed to proceed. The reaction solution was filtered, unreacted HDI was then removed using a thin film evaporator, and thereby a polyisocyanate composition PA-a1 was obtained. The NCO content of the obtained PA-a1 was 3.9 mass%, and the content of the remaining HDI was 0.7 mass%.

[Examples 2 to 7 and Comparative Examples 1 to 4]

(Production of polyisocyanate compositions PA-a2 to PA-a7 and PA-b1 to PA-b4)

Polyisocyanate compositions were obtained in the same method as in Example 1 except that the type of the polyester polyol and the amount thereof added were changed as shown in the following table.

[Example 8]

(Production of polyisocyanate composition PA-a8)

The inside of a 4-neck flask including a stirrer, a thermometer, a reflux cooling tube, a nitrogen blowing tube, and a dropping funnel was set to a nitrogen atmosphere, 510 g of HDI, 490 g of isophorone diisocyanate (IPDI), and 437 g of the polyester polyol A-4 were put thereinto, the temperature in the reaction container was kept at 100°C with stirring, and a urethane reaction was allowed to proceed. The reaction solution was filtered, unreacted HDI was then removed using a thin film evaporator, and thereby a polyisocyanate composition PA-a8 was obtained. The NCO content of the obtained PA-a8 was 4.0 mass%, the content of the remaining HDI was 0.4 mass%, and the content of the remaining IPDI was 0.4 mass%.

[Example 9 and Comparative Example 5]

(Production of polyisocyanate compositions PA-a9 and PA-b5)

Polyisocyanate compositions were obtained in the same method as in Example 8 except that the amounts of HDI and IPDI added and the types of polyester polyols and the amount thereof added were changed as shown in the following table.

[Comparative Example 6]

(Production of polyisocyanate composition PA-b6)

The inside of a 4-neck flask including a stirrer, a thermometer, a reflux cooling tube, a nitrogen blowing tube, and a dropping funnel was set to a nitrogen atmosphere, 1,000 g of HDI, and 50 g of a polycaprolactone polyol (product name "Placcel (registered trademark) 303" commercially available from Daicel Corporation, a number-average molecular weight of 300, and an average functional group number of hydroxy groups of 3.0) were put thereinto, the temperature in the reaction container was kept at 90°C for 1 hour with stirring, and a urethane reaction was allowed to proceed. Then, the temperature in the reaction container was kept at 60°C, an isocyanurate-forming catalyst tetramethylammonium caproate was added thereto, phosphoric acid was added when the yield reached 54 mass%, and the reaction was stopped. The reaction solution was filtered, unreacted HDI was then removed using a thin film evaporator, and thereby a polyisocyanate composition PA-b6 was obtained. The NCO content of the obtained PA-b6 was 19.2 mass%, and the content of the remaining HDI was 0.7 mass%.

The following Table 1 shows the evaluation results of the cured films produced using the polyisocyanate compositions obtained in examples and comparative examples. Here, in Table 1, the types of polyester polyols are as follows.

(Polyester polyol)

A-1: product name "PolyLite (registered trademark) OD-X-106" commercially available from DIC, containing an adipic acid unit, a number-average molecular weight of 2,400, and an average functional group number of hydroxy groups of 2.6

A-2: product name "PolyLite (registered trademark) OD-X-2518" commercially available from DIC, containing an adipic acid unit, a number-average molecular weight of 3,000, and an average functional group number of hydroxy groups of 2.9

A-3: synthetic product in Synthesis Example 1, containing an adipic acid unit, a number-average molecular weight of 2,100, and an average functional group number of hydroxy groups of 2.1

A-4: synthetic product in Synthesis Example 2, containing a succinic acid unit, a number-average molecular weight of 2,300, and an average functional group number of hydroxy groups of 2.4

A-5: synthetic product in Synthesis Example 3, containing a sebacic acid unit, a number-average molecular weight of 2,000, and an average functional group number of hydroxy groups of 2.0

A-6: synthetic product in Synthesis Example 4, containing a dodecanedioic acid unit, a number-average molecular weight of 2,000, and an average functional group number of hydroxy groups of 2.0

A-7: product name "MAXIMOL (registered trademark) SDK-145" commercially available from Kawasaki Kasei Chemicals Ltd., containing a succinic acid unit, a number-average molecular weight of 1,250, and an average functional group number of hydroxy groups of 2.0

A-8: product name "Placcel (registered trademark) 303" commercially available from Daicel Corporation, a number-average molecular weight of 300 and an average functional group number of hydroxy groups of 3.0

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Polyisocyanate composition | | | PA-a1 | PA-a2 | PA-a3 | PA-a4 | PA-a5 | PA-a6 | PA-a7 | PA-a8 | PA-a9 |
| Composition | HDI | Amount added (g) | 1000 | 1000 | 1000 | 1000 | 1000 | 1000 | 1000 | 510 | 110 |
| | IPDI | Amount added (g) | - | - | - | - | - | - | - | 490 | 890 |
| | Polyester polyol | Type | A-1 | A-2 | A-3 | A-4 | A-3 | A-3 | A-5 | A-4 | A-4 |
| | | Type of carboxylic acid unit | Adipic acid unit | Adipic acid unit | Adipic acid unit | Succinic acid unit | Adipic acid unit | Adipic acid unit | Sebacic acid unit | Succinic acid unit | Succinic acid unit |
| | | Amount added (g) | 746 | 608 | 559 | 496 | 321 | 2380 | 514 | 437 | 388 |
| Physical properties | NCO/OH | - | 15 | 20 | 21 | 23 | 37 | 5.0 | 23 | 23 | 23 |
| | Content of aliphatic diisocyanate | (mass%) | 100 | 100 | 100 | 100 | 100 | 100 | 100 | 64 | 16 |
| | NCO% | (mass%) | 3.9 | 5.3 | 4.4 | 4.1 | 4.0 | 4.0 | 4.0 | 4.0 | 3.9 |
| | Amount of remaining HDI | (mass%) | 0.7 | 0.7 | 0.7 | 0.7 | 0.7 | 1.3 | 1.5 | 0.4 | 0.1 |
| | Amount of remaining IPDI | (mass%) | - | - | - | - | - | - | - | 0.4 | 0.7 |
| Evaluation | Coating curing rate | | A | A | A | A | A | B | B | A | A |
| | Appearance | | A | A | A | A | A | A | A | A | A |
| | Hydrolyzability | | A | A | A | A | A | A | A | A | A |

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Polyisocyanate composition | | | PA-b1 | PA-b2 | PA-b3 | PA-b4 | PA-b5 | PA-b6 |
| Composition | HDI | Amount added (g) | 1000 | 1000 | 1000 | 300 | - | 1000 |
| | IPDI | Amount added (g) | - | - | - | - | 1000 | - |
| | Polyester polyol | type | A-7 | A-6 | A-3 | A-4 | A-4 | A-8 |
| | | Type of carboxylic acid unit | Succinic acid unit | Dodecanedioic acid unit | Adipic acid unit | Succinic acid unit | Succinic acid unit | - |
| | | Amount added (g) | 496 | 517 | 517 | 1369 | 233 | 50 |
| Physical properties | NCO/OH | - | 15 | 23 | 23 | 2.5 | 37 | 5.0 |
| | Content of aliphatic diisocyanate | (mass%) | 100 | 100 | 100 | 100 | 0 | 100 |
| | NCO% | (mass%) | 6.2 | 4.0 | 4.3 | 4.2 | 5.3 | 19.2 |
| | Amount of remaining HDI | (mass%) | 0.7 | 1.7 | 3.0 | 2.5 | - | 0.7 |
| | Amount of remaining IPDI | (mass%) | - | - | - | - | 0.8 | - |
| Evaluation | Coating curing rate | | A | B | C | C | A | A |
| | Appearance | | C | A | C | C | C | A |
| | Hydrolyzability | | A | C | C | c | A | C |

EP 4 089 128 A1

14

As shown in Table 1 and Table 2, in the polyisocyanate compositions PA-a1 to PA-a9 (Examples 1 to 9) which contained a polyisocyanate derived from an aliphatic diisocyanate and a polyester polyol having a specific structure, and in which the NCO content was 3.9 mass% or more and 5.3 mass% or less, a molar ratio NCO/OH during a reaction between the isocyanate group of isocyanate and the hydroxy group of the polyester polyol was 3.0 or more, the content of the aliphatic diisocyanate with respect to a total mass of the diisocyanate was 10 mass% or more and 100 mass% or less, the content of the unreacted diisocyanate was 2.0 mass% or less, and the curing rate of the coating and the appearance and the hydrolyzability when formed into a cured film were all excellent.

On the other hand, in the polyisocyanate composition PA-b1 (Comparative Example 1) in which the NCO content was more than 5.9 mass%, the hydrolyzability when formed into a cured film was good, but the appearance was poor.

In the polyisocyanate composition PA-b2 (Comparative Example 2) in which the number of carbon atoms in the dicarboxylic acid unit was more than 8, the coating curing rate and the appearance when formed into a cured film were good, but the hydrolyzability was poor.

In the polyisocyanate composition PA-b3 (Comparative Example 3) in which the content of the unreacted diisocyanate was more than 2.0 mass%, the coating curing rate, and the appearance and the hydrolyzability when formed into a cured film were all poor.

In the polyisocyanate composition PA-b4 (Comparative Example 4) in which a molar ratio NCO/OH during a reaction between the isocyanate group of the isocyanate and the hydroxy group of the polyester polyol was less than 3.0 and the content of the unreacted diisocyanate was more than 2.0 mass%, the coating curing rate, and the appearance and the hydrolyzability when formed into a cured film were all poor.

In the polyisocyanate composition PA-b5 (Comparative Example 5) in which the content of the aliphatic diisocyanate with respect to a total mass of the diisocyanate was less than 10 mass%, the coating curing rate and the hydrolyzability when formed into a cured film were good, but the appearance was poor.

In the polyisocyanate composition PA-b6 (Comparative Example 6) which contained a polyisocyanate using polycaprolactone polyol in place of a polyester polyol having a specific structure and in which the NCO content was more than 5.9 mass%, the coating curing rate and the appearance when formed into a cured film were good, but the hydrolyzability was poor.

According to the polyisocyanate composition of the present embodiment, it is possible to provide a polyisocyanate composition having an excellent appearance and excellent hydrolyzability when formed into a cured film by curing the polyisocyanate composition alone.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A polyisocyanate composition containing a polyisocyanate derived from a diisocyanate and a polyester polyol, wherein

   a molar ratio NCO/OH during a reaction between an isocyanate group of the diisocyanate and a hydroxy group of the polyester polyol is 3.0 or more,
   the content of an aliphatic diisocyanate with respect to a total mass of the diisocyanate is 10 mass% or more and 100 mass% or less,
   the polyisocyanate composition is substantially free of unreacted diisocyanates,
   an isocyanate group content of the polyisocyanate composition with respect to a total mass of the polyisocyanate composition is 1.0 mass% or more and 5.9 mass% or less, and
   the polyester polyol is composed of a dicarboxylic acid unit having 8 or fewer carbon atoms and a polyol unit.

2. The polyisocyanate composition according to Claim 1,
   wherein the number-average molecular weight of the polyester polyol is 1,000 or more and 4,000 or less.

3. The polyisocyanate composition according to Claim 1 or 2,
   wherein the average functional group number of hydroxy groups of the polyester polyol is 2.0 or more and 4.0 or less.

4. The polyisocyanate composition according to any one of Claims 1 to 3,

wherein the polyester polyol is composed of an aliphatic dicarboxylic acid unit having 8 or fewer carbon atoms and an aliphatic polyol unit.

5. The polyisocyanate composition according to any one of Claims 1 to 4,
   wherein a molar ratio NCO/OH during a reaction between an isocyanate group of the diisocyanate and a hydroxy group of the polyester polyol is 5.5 or more and 20 or less.

6. The polyisocyanate composition according to any one of Claims 1 to 5, which is a curing agent for a coating composition or a resin composition.

7. A cured film obtained by curing the polyisocyanate composition of any one of Claims 1 to 5 in the presence of a catalyst.

Europäisches
Patentamt
European
Patent Office
Office européen
des brevets

**EUROPEAN SEARCH REPORT**

Application Number

EP 22 17 2113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2009 096824 A (KAWASAKI KASEI CHEMICALS) 7 May 2009 (2009-05-07) * paragraphs [0016], [0028], [0031], [0033]; claims 1-7 * ----- | 1-7 | INV. C08G18/10 C08G18/24 C08G18/30 C08G18/42 |
| X | US 2018/002479 A1 (MAGER DIETER [DE] ET AL) 4 January 2018 (2018-01-04) * paragraph [0069]; claims 5,7-11,13; example 2 * ----- | 1-7 | C08G18/72 C08G18/73 C09D175/06 C09J175/06 |

TECHNICAL FIELDS
SEARCHED      (IPC)

C08G
C09D
C09J

The present search report has been drawn up for all claims

| Place of search | Date of completion of the search | Examiner |
|---|---|---|
| Munich | 29 September 2022 | Scheuer, Sylvie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 17 2113**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-09-2022**

| Patent document cited in search report | | Publication date | Patent family member(s) | | Publication date |
|---|---|---|---|---|---|
| JP 2009096824 A | | 07-05-2009 | JP | 5263644 B2 | 14-08-2013 |
| | | | JP | 2009096824 A | 07-05-2009 |
| US 2018002479 A1 | | 04-01-2018 | CN | 107207697 A | 26-09-2017 |
| | | | EP | 3247732 A1 | 29-11-2017 |
| | | | ES | 2707128 T3 | 02-04-2019 |
| | | | US | 2018002479 A1 | 04-01-2018 |
| | | | WO | 2016116376 A1 | 28-07-2016 |

EPO FORM P0459

For more details about this annex : see Official Journal of the European Patent Office, No. 12/82

**EP 4 089 128 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5263644 B